**Europäisches Patentamt**

**European Patent Office**

**Office européen des brevets**

(19)

(11) Numéro de publication: **0 020 236**
**B1**

(12)

# FASCICULE DE BREVET EUROPEEN

(45) Date de publication du fascicule du brevet: **21.09.83**

(51) Int. Cl.³: **H 04 L 7/02**

(21) Numéro de dépôt: **80400698.9**

(22) Date de dépôt: **20.05.80**

(54) **Dispositif de synchronisation d'un signal d'horloge et démodulateur de phase différentielle comportant un tel dispositif.**

(30) Priorité: **01.06.79 FR 7914181**

(43) Date de publication de la demande:
**10.12.80 Bulletin 80/25**

(45) Mention de la délivrance du brevet:
**21.09.83 Bulletin 83/38**

(84) Etats contractants désignés:
**DE GB IT NL SE**

(56) Documents cités:
**FR - A - 2 265 140**
**FR - A - 2 270 736**
**FR - A - 2 367 387**
**US - A - 3 599 103**
**US - A - 818 346**
**US - A - 3 843 931**

(73) Titulaire: **THOMSON-CSF**
**173, Boulevard Haussmann**
**F-75379 Paris Cedex 08 (FR)**

(72) Inventeur: **Perez, André**
**"THOMSON-CSF" - SCPI 173, bld Haussmann**
**F-75360 Paris Cedex 08 (FR)**
Inventeur: **Boljevic, Jean-Marc**
**"THOMSON-CSF" - SCPI 173, bld Haussmann**
**F-75360 Paris Cedex 08 (FR)**
Inventeur: **Dautremay, Alain**
**"THOMSON-CSF" - SCPI 173, bld Haussmann**
**F-75360 Paris Cedex 08 (FR)**

(74) Mandataire: **Turlèque, Clotilde et al,**
**THOMSON-CSF SCPI 173, Bld Haussmann**
**F-75379 Paris Cedex 08 (FR)**

EP 0 020 236 B1

Dispositif de synchronisation d'un signal d'horloge et démodulateur de phase
différentielle comportant un tel dispositif .

La présente invention concerne les dispositifs de synchronisation de signaux d'horloge, et particulier ceux qui équipent les démodulateurs de phase différentielle utilisés dans les systèmes de transmission de données synchrones.

Ces démodulateurs nécessitent de reconstituer à la réception un signal d'horloge locale asservi en fréquence et en phase sur un signal d'horloge d'émission, dont la fréquence est celle à laquelle des données ont été émises à l'aide d'une porteuse modulée en phase.

Il est connu de réaliser des filtres étroits permettant d'extraire de la porteuse modulée un signal d'horloge locale, dont la fréquence et la phase sont celles de signal d'horloge d'émission, mais la mise en oeuvre de procédés de filtrage analogiques ou numériques à bande étroite est coûteuse. Un dispositif mettant en oeuvre un tel procédé est décrit dans la demande de brevet francais 75 14 020, (FR—A—2309089).

La présente invention a pour objet de remédier à cet inconvénient à l'aide de moyens simples.

Selon l'invention un dispositif de synchronisation d'un signal d'horloge locale par rapport à un premier signal d'horloge, dont la fréquence $F_1$ est celle à laquelle des groupes de deux bits de données ont été émis et transmis à l'aide d'une porteuse de fréquence F modulée en phase différentielle, $F_1$ étant égale à

$$\frac{2F}{3},$$

est caractérisé en ce qu'il comporte: un écrêteur de l'onde porteuse ayant une sortie pour délivrer un premier signal; un circuit différentiateur ayant une entrée couplée à la sortie de l'écrêteur; un premier dispositif d'asservissement de fréquence et de phase pour délivrer un deuxième signal d'horloge de fréquence égale au quadruple de la fréquence F de la porteuse, ayant une entrée couplée à la sortie du circuit différentiateur; un diviseur de fréquence par quatre ayant une entrée couplée à la sortie du premier dispositif d'asservissement de fréquence et de phase et une sortie pour délivrer un deuxième signal; un dispositif de detection de la position des changements de phase de l'onde porteuse effectuant une suite de corrélation à partir du premier signal et du deuxième signal, ayant une première et une deuxième entrée couplées respectivement à la sortie du diviseur et à la sortie de l'écrêteur, et une sortie pour délivrer des impulsions représentatives de la position des sauts de phase; et un deuxième dispositif d'asservissement de fréquence et de phase ayant une entrée couplée à la sortie du dispositif de détection et une sortie pour délivrer un signal d'horloge locale asservi.

L'invention sera mieux comprise et d'autres caractéristiques apparaîtront à l'aide de la description et des dessins s'y rapportant sur lesquels:

La figure 1 est un schéma d'un mode de réalisation d'un dispositif de synchronisation selon l'invention;

La figure 2 représente des diagrammes tension-temps des signaux permettant d'expliquer le fonctionnement du dispositif de la figure 1.

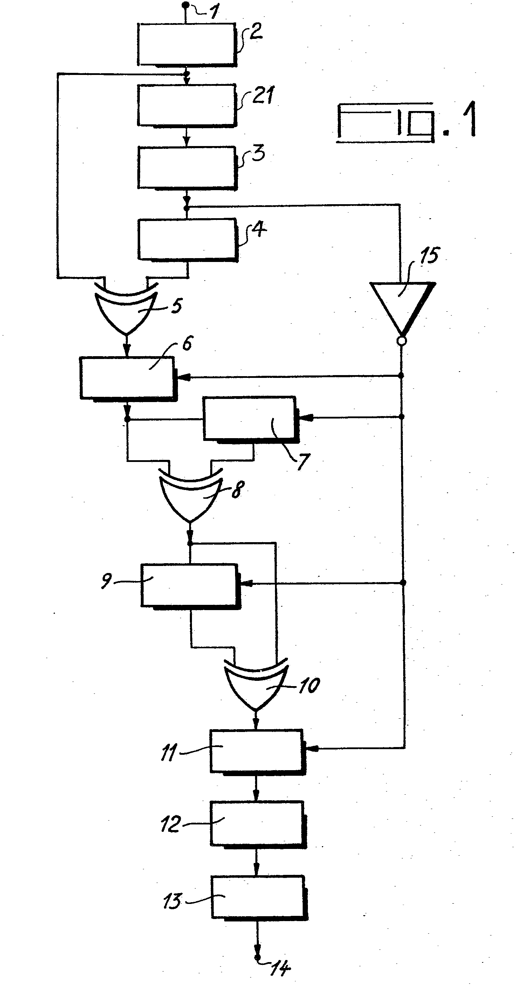

Sur la figure 1, une borne 1, destinée à recevoir une porteuse modulée en phase est appliquée à un écrêteur 2 dont la sortie est couplée à un dispositif d'asservissement de fréquence et de phase 3 à travers un différentiateur 21 réalisant la différentiation des fronts montants et descendants du signal délivré par l'écrêteur 2.

La sortie du dispositif d'asservissement 3 est couplée à travers un diviseur 4 à une première entrée d'une porte OU exclusif, 5, dont la deuxième entrée est reliée à la sortie de l'écrêteur 2. La sortie de cette porte OU exclusif, 5, est reliée à l'entrée d'une première bascule synchronisée 6. La sortie de cette première bascule est reliée à une première entrée d'une deuxième porte OU exclusif, 8, dont la deuxième entrée est couplée à la sortie de la première bascule 6 à travers une deuxième bascule synchronisée 7. La sortie de cette deuxième porte OU exclusif, 8, est reliée à une première entrée d'une troisième porte OU exclusif, 10, dont la deuxième entrée est couplée à la sortie de la deuxième porte OU exclusif, 8, à travers une troisième bascule synchronisée 9. La sortie de cette troisième et dernière porte OU, exclusif, 10, est couplée à l'entrée d'un dispositif d'asservissement de fréquence et de phase 13 à travers un ensemble de bascules synchronisées 11 suivi d'un différentiateur 12 agissant sur les fronts montants du signal issu de l'ensemble 11. La sortie du dispositif 13 est reliée à une borne de sortie 14. Chacune des bascules synchronisées 6, 7, 9 et 11 comporte une entrée de signal d'horloge couplée à la sortie du dispositif 3 à travers une porte complémentée, 15.

L'exemple de réalisation décrite s'applique à une démodulateur de phase différentielle à 2400 bits /seconde. Dans ce type de modulation, la fréquence de la porteuse est égale à 1800 Hz; la modulation de phase différentielle consiste à appliquer à cette porteuse, à chaque instant de signalisation, un saut de phase de 0,90°, 180° ou 270°, chaque saut de phase correspondant à un groupe de deux bits de données. La fréquence des sauts de phase est égale à 1200 Hz.

Les dispositifs d'asservissement de fréquence et de phase 3 et 13 sont du type classique. Leur principe consiste à dériver la fréquence d'horloge d'un oscillateur fournissant une fréquence q fois plus élevée que la fréquence d'horloge désirée à la sortie du dispositif, et a l'appliquer à une diviseur à rang variable, le range de division pouvant être commandé pour faire varier la fréquence et par suite la phase de l'horloge délivrée. Ce choix du rang de division est réalisé par un comparateur de phase qui, suivant la position des transitions de signal appliqué à l'entrée du dispositif, par rapport au signal d'horloge délivré, commande la valeur du rang de division afin de rapprocher le front montant du signal d'horloge délivré des transitions de signal. Ainsi les dispositifs 3 et 13 délivrent un signal d'horloge asservi sur les transitions de signal appliquées sur leur entrée.

Le fonctionnement de ce dispositif sera mieux compris à l'aide des diagrammes tension-temps décrits ci-après.

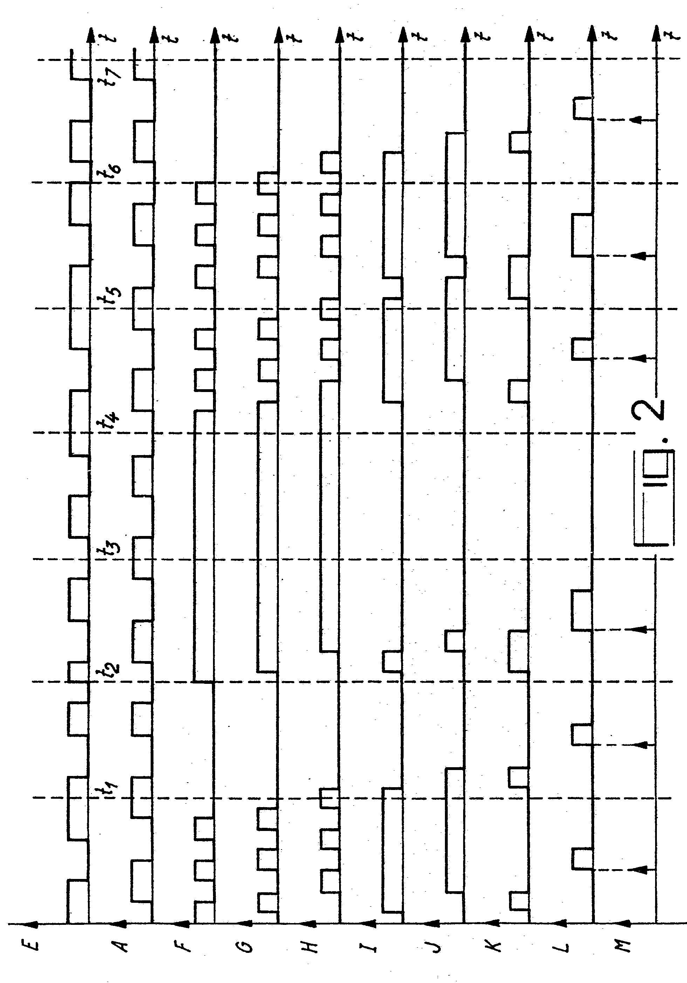

Sur la figure 2 sont représentés des signaux E, A, F, G, H, I, J, K, L et M respectivement présents à la sortie de l'écrêteur 2, à la sortie du diviseur 4, à la sortie du la porte OU exclusif, 5, à la sortie de la première bascule 6, à la sortie de la deuxième bascule 7, à l'entrée de la troisième bascule 9, à la sortie de cette même troisième bascule 9, à l'entrée de l'ensemble des bascules 11, à la sortie de ce même ensemble 11, et à la sortie du différentiateur 12.

Le signal E de la figure 2 représente le signal de données modulé et écrêté. Les variations de phase appliquées aux instants de signalisation $t_1$ à $t_7$ sont respectivement: +270°, +180°, 0°, 270°, 180°, 90° et 0°. Ce signal E ayant comme propriété d'avoir ses fronts montants et ses fronts descendants distants les uns des autres d'un nombre entier de périodes d'une fréquence $F_2$ égale au quadruple de la fréquence porteuse ($F_2$=7 200 Hz), est appliqué aprés différentiation des fronts montants et descendants par le différentiateur 21 au dispositif d'asservissement de fréquence et de phase 3 qui délivre un signal d'horloge asservi dont la fréquence est 7 200 Hz. La fréquence de ce signal d'horloge est divisée par quatre par le diviseur 4 afin d'obtenir le signal A dont la fréquence est celle de la porteuse et dont la phase est définie à

$$k\frac{\pi}{2}$$

près (k entier positif). Le signal d'horloge obtenu à la sortie du dispositif 3 est aussi utilisé après inversion, pour piloter les bascules synchronisées 6, 7, 9 et 11. Le signal F est obtenu à la sortie de la porte, 5, qui réalise une fonction OU exclusif entre les signaux A et E. Les signaux G et H représentent respectivement le signal F retardé d'un retard $T_1$ égal à une demi-période de signal d'horloge à 7 200 Hz

$$(T_1=\frac{1}{8F})$$

et le signal G retardé d'un retard $T_2$ égal à une période de signal d'horloge à 7 200 Hz

$$(T_2=\frac{1}{4F}),$$

ces retards sont respectivement obtenus à l'aide des bascules 6 et 7. De même la deuxième porte 8, réalise une fonction OU eclusif entre les signaux H et G, et délivre le signal I. La troisième porte, 10, réalise une fonction OU exclusif entre le signal I et le signal J qui représente le signal I retardé d'un retard $T_3$ égal à une période de signal d'horloge à 7 200 Hz

$$(T_3=\frac{1}{4F}),$$

ce retard étant obtenu à l'aide de la bascule 9. Le signal K qui résulte de cette dernière corrélation est appliqué à l'ensemble de bascules 11 qui introduit un retard, égal à deux périodes de signal d'horloge à 7 200 Hz, afin d'obtenir le signal L dont le front montant est centré entre les instants de signalisation. Ce signal L appliqué après différentiation au dispositif d'asservissement de fréquence et de phase 13, permet d'obtenir un signal d'horloge locale, à une fréquence $F_1$ égale à 1200 Hz, asservi. En effet les impulsions obtenues après différentiation sont situées soit à

$$\frac{1}{12F_1},$$

soit à

$$\frac{3}{12F_1}$$

du milieu de l'intervalle entre deux instants de signalisation, ce qui permet d'obtenir un signal d'horloge locale synchronisée sur une position moyenne située entre

$$\frac{1}{12F_1}$$

et

$$\frac{3}{12F_1}$$

du milieu de l'intervalle de signalisation.

L'invention n'est pas limitée aux modes de réalisation décrits et représentés, en particulier les retards introduits par les bascules 6, 7, 9 et 11 peuvent être obtenus par tout autre dispositif à retard et être modifiés dans le cas d'une autre application.

Il est à noter que le signal K est indépendant de la phase du signal A par rapport au signal E.

**Revendications**

1. Dispositif de synchronisation d'un signal d'horloge locale par rapport à un premier signal d'horloge, dont la fréquence $F_1$ est celle à laquelle des groupes de deux bits de données onte été émis et transmis à l'aide d'une porteuse de fréquence F modulée en phase différentielle, $F_1$ étant égale à

$$\frac{2F}{3},$$

caractérisé en ce qu'il comporte' un écrêteur (2) de l'onde porteuse ayant une sortie pour délivrer un premier signal; un circuit différentiateur (21) ayant une entrée couplée à la sortie de l'écrêteur (2) ì un premier dispositif (3) d'asservissement de fréquence et de phase pour délivrer und deuxième signal d'horloge de fréquence égale au quadruple de la fréquence F de la porteuse, ayant une entrée couplée à la sortie du circuit différentiateur (21); une diviseur de fréquence par quatre (4) ayant une entrée couplée à la sortie du premier dispositif (3) d'asservissement de fréquence et de phase et une sortie pour délivrer un deuxième signal; un dispositif (5 à 12) de détection de la position des changements de phase de l'onde porteuse effectuant une suite de corrélations à partir du premier signal et du deuxième signal, ayant une première et une deuxième entrée couplées respectivement à la sortie du diviseur (4) et à la sortie de l'écrêteur (2), et une sortie pour délivrer des impulsions représentatives de la position des sauts de phase, et un deuxième dispositif d'asservissement de fréquence et de phase (13) ayant une entrée couplée à la sortie du dispositif (5 à 12) de détection et une sortie pour délivrer un signal d'horloge locale asservi.

2. Dispositif de synchronisation selon la revendication 1, caractérisé en ce que le dispositif de détection de la position des changements de phase comporte: une première porte OU exclusif (5) ayant une première et une deuxième entrée respectivement couplées à la sortie du diviseur (4) et à la sortie de l'écrêteur (2); un premier dispositif à retard (6), de retard

$$T_1=\frac{1}{8F},$$

ayant une entrée couplée à la sorite de la première porte OU exclusif (5); un deuxième dispositif à retard (7), de retard

$$T_2=\frac{1}{4F};$$

une deuxième porte OU exclusif (8) ayant une première entrée couplée à la sortie du premier dispositif à retard (6), une seconde entrée couplée à la sortie du premier dispositif à retard (6) à travers le deuxième dispositif à retard (7); un troisième dispositif à retard (9), du retard

$$T_3=\frac{1}{4F};$$

une troisième porte OU exclusif (10) ayant une première et une deuxième entrée couplées respectivement à la sortie de la deuxième porte OU exclusif (8) et à la sortie de la deuxième porte OU exclusif (8) à travers le troisième dispositif à retard (9); un quatrième dispositif à retard (11), de retard

$$T_4=K\frac{1}{4F}$$

(K entier positif); et un différentiateur (12) ayant une entrée couplée à la sortie de la troisième porte OU exclusif (10) à travers le quatrième dispositif à retard (11) et une sortie couplée à l'entrée du deuxième dispositif d'asservissement (13).

3. Dispositif de synchronisation selon la revendication 2, caractérisé en ce que le dispositif de détection comporte un inverseur (15) et en ce que les dispositifs à retard (6, 7, 9) sont des bascules synchronisées ayant une entrée de signal d'horloge couplée à la sortie du premier dispositif d'asservissement (3) à travers l'inverseur (15).

4. Démodulateur de phase différentielle, caractérisé en ce qu'il comporte au moins un dispositif de synchronisation d'un signal d'horloge selon l'une des revendications précédentes.

**Patentansprüche**

1. Vorrichtung zur Synchronsierung eines örtlichen Zeitgebersignals in bezug auf ein erstes Zeitgebersignal, dessen Frequenz $F_1$ derjenigen Frequenz gleich ist, mit welcher Gruppen zweier Informationsbits abgegeben und vermittels einer differentialsphasemodulierten Trägerwelle mit einer Frequenz F, wobei $F_1$ gleich

$$\frac{2F}{3}$$

ist, übertragen werden, dadurch gekennzeichnet, dass sie folgende Bauteile aufweist: Eien Amplitudenbegrenzer (2) für die Trägerwelle, mit einem ein erstes Signal abgebenden Ausgang; eine erste Frequenz- und Phasensteuereinrichtung, die ein zweites Zeitgebersignal abgibt, dessen Frequenz das das Vierfache der Trägerwellenfrequenz F beträgt, mit einem mit dem Ausgang des Differenzierungskreises (21) gekuppelten Eingang; einen frequenz-viertelnden Frequenzteiler (4) mit einem mit dem Ausgang der ersten Frequenz- und Phasensteuereinrichtung (3) gekoppelten Eingang sowie mit einem ein zweites Siganl abgebenden Ausgang; eine Einrichtung (5—12) zum Ermitteln der Lage der Tragerwellenphasenänderung, welche eine Reihe von Beziehungen unter Zugrundelegung des ersten und des zweiten Signals erstellt und einen ersten, sowie einen zweiten Eingang besitzt, deren einer mit dem Ausgang des Frequenzteilers (4) und deren anderer mit dem Ausgang des Amplitudenbegrenzers (2) gekoppelt ist, und ferner einen Ausgang, der die Phasensprünge darstellenden Impulse abgibt und eine zweite Frequenz- und Phasensteuereinrichtung (13) mit einem mit dem Ausgang der Ermittlungseinrichtung (5 bis 12) gekoppelten Eingang und einem ein gesteurtes örtliches Zeitgebersignal abgebenden Ausgang.

2. Synchronisierungsvorrichtung nach Anspruch 1, dadurch gekennzeichnet, dass die Einrichtung zur Ermittlung der Phasenänderungsanlagen folgende Bauteile umfasst: Ein erstes Exclusiv-Oder-Tor (5) mit einem ersten und einem zweiten Ausgang, von deren einer mit dem Ausgang der Teileinrichtung (4) und deren anderen mit dem Ausgang des Amplitudenbegrenzers (2) gekoppelt ist; eine erste Verzögerungseinrichtung (6) mit einer Verzögerung

$$T_1 = \frac{1}{8F}$$

und mit einem mit dem Ausgang des Exclusiv-Oder-Tors (5) gekoppelten Eingang; eine zweite Verzögerungseinrichtung (7) mit einer Verzögerung

$$T_2 = \frac{1}{4F},$$

ein zweites Exclusiv-Oder-Tor (8) mit einem mit dem Ausgang der ersten Verzögerungseinrichtung (6) gekoppelten ersten Eingang und einem über die zweite Verzögerungsvorrichtung (7) mit dem Ausgang der ersten Verzögerungsvorrichtung (6) gekoppelten zweiten Eingang; eine dritte Verzögerungseinrichtung (9) mit einer Verzögerung

$$T_3 = \frac{1}{4F} ;$$

ein drittes Exclusiv-Oder-Tor (10) mit einem ersten und einem zweiten Eingang, deren einer mit dem Ausgang des zweiten Exclusiv-Oder-Tors (8) und deren anderer über die dritte Verzögerungseinrichtung (9) mit dem Ausgang des zweiten Exclusiv-Oder-Tors gekoppelt ist; eine vierte Verzögerungseinrichtung (11) mit einer Verzögerung

$$T_4 = K\frac{1}{4F},$$

wobei K eine positive ganze Zahl darstellt; une eine Differenzierungseinrichtung (12) mit einem über die vierte Verzögerungseinrichtung (11) mit dem Ausgang des dritten Exclusiv-Oder-Tors gekoppelten Eingang, sowie mit einem mit dem Eingang der zweiten Steuereinrichtung (13) gekoppelten Ausgang.

3. Synchronisierungsvorrichtung nach Anspruch 2, dadurch gekennzeichnet, dass die Ermittlungseinrichtung einen Wendeschalter (15) aufweist, und dass die Verzögerungseinrichtungen (6, 7, 9) synchronisierte Kippschaltungen mit einem über den Wendeschalter (15) mit dem Ausgang der ersten Steuereinrichtung (3) gekoppelten Zeitgebersignal-Eingang sind.

4. Differentialphasenmodulator, dadurch gekennzeichnet, dass er wenigstens eine Zeitgebersignal-Synchronisierungsvorrichtung nach einem der vorstehenden Ansprüche aufweist.

**Claims**

1. A device for synchronizing a local clock signal with reference to a first clock signal the frequency $F_1$ is equal to the frequency at which groups of two bits of data have been emitted and transmitted by means of a differential phase-modulated carrier wave of frequency F, $F_1$ being equal to

$$\frac{2F}{3},$$

characterized in that it comprises: an amplitude limiter (2) for the carrier wave, provided with an output terminal for delivering a first signal; a differentiating circuit (21) having an input terminal coupled to the output terminal of the amplitude limiter (2); a first frequency and phase regulating device (3) adapted to deliver a second clock signal with a frequency equal to four times the carrier wave frequency, said regulating device having an input terminal coupled to the output terminal of the differentiating circuit (21); a frequency divisor (4) dividing the frequency by four and having an input terminal coupled to the output terminal of the first frequency and phase regulating device (3), and an output terminal adapted to deliver a second signal; a device (5 to 12) for detecting the position of the phase changements of the carrier wave and effecting a series of correlations based on the first signal and the second signal, said detecting device having a first and a second input terminal coupled respectively to the output terminal of the diviser (4) and the output terminal of the amplitude limiter (2), and an output terminal adapted to deliver pulses representing the position of the phases skippings; and a second frequency and phase regulating device (13) having an input terminal coupled to the output terminal of the detecting device (5 to 12), as well as an output terminal adapted to deliver a controlled local clock signal.

2. A synchronizing device according to claim 1, characterized in that the device for detecting the position of the phase changements comprises: a first exclusive Or gate (5) having a first and a second input terminal coupled respectively to the output terminal of the diviser (4) and the output terminal of the amplitude limiter (2); a first delaying device (6) with a delay

$$T_1 = \frac{1}{8F},$$

having an input terminal coupled to the output terminal of the first exclusive OR gate (5); a second delaying device (7) with a delay

$$T_2 = \frac{1}{4F};$$

a second exclusive OR gate (8) having a first input terminal coupled to the output terminal of the first delaying device (6), and a second input terminal coupled to the output terminal of the first delaying device (6) through the second delaying device (7); a third delaying device (9) with a delay

$$T_3 = \frac{1}{4F};$$

a third exclusive OR gate (10) having a first and a second input terminal coupled respectively to the output terminal of the second exclusive OR gate (8) and, through the third delaying device (9), to the output terminal of the second exclusive OR gate (8); a fourth delaying device (11) with a delay

$$T_4 = K\frac{1}{4F},$$

K being a positive integer; and a differentiator (12) having an input terminal coupled to the output terminal of the third exclusive OR gate (10) through the fourth delaying device (11), and an output terminal coupled to the input terminal of the second regulating device (13).

3. A synchronizing device according to claim 2, characterized in that the detecting device comprises an inverter (15), and in that the delaying devices (6, 7, 9) are synchronized flip-flop circuits having a clock signal input terminal coupled to the output terminal of the first regulating device (3) through said inverter (15).

4. A differential phase demodulator, characterized in that it comprises at least one clock signal synchronizing device according to any one of the preceding claims.

Fig. 1

Fig. 2